# FASCICULE DE BREVET EUROPEEN

(11) **EP 1 906 574 B1**
(45) Date de publication et mention de la délivrance du brevet: **13.04.2011**
(21) Numéro de dépôt: 07116724.1
(22) Date de dépôt: 19.09.2007
(51) Int. Cl.: H04J 14/02, H04L 1/22

(54) **Procédé de commande pour un module de protection partagé et dispositif de traitement de longueurs d'ondes optiques**
Verfahren zur Steuerung eines gemeinsamen Schutzmoduls und Vorrichtung zur Verarbeitung von optischen Wellenlängen
Control method for a shared protection module and device for processing optical wavelengths

(30) Priorité: 20.09.2006 FR 0653827
(43) Date de publication de la demande: 02.04.2008
(73) Titulaire: Alcatel Lucent, 75008 Paris (FR)
(72) Inventeur: Peloso, Pierre, 91460, MARCOUSSIS (FR); Zami, Thierry, 91300, MASSY (FR)
(74) Mandataire: Thibaud, Jean-Baptiste

(56) Documents cités:
- EP-A2- 1 111 954
- WO-A-00/57583
- WO-A-01/56211
- WO-A2-02/075371
- RHEE J-K ET AL: "A BROADCAST-AND-SELECT OADM OPTICAL NETWORK WITH DEDICATED OPTICAL-CHANNEL PROTECTION" JOURNAL OF LIGHTWAVE TECHNOLOGY, IEEE SERVICE CENTER, NEW YORK, NY, US, vol. 21, no. 1, janvier 2003 (2003-01), pages 25-31, XP001228593 ISSN: 0733-8724

## Description

L'invention se rapporte à un module de traitement de longueurs d'ondes optiques, du type pouvant être par exemple utilisé dans un noeud de commutation optique transparent ou photonique, c'est-à-dire dans lequel des signaux sont transférés en restant dans le domaine optique sans conversion électronique. L'invention se rapporte notamment au domaine des réseaux à multiplexage en longueurs d'ondes (WDM).

Dans les réseaux optiques transparents, une caractéristique critique est la capacité du réseau à se reconfigurer en cas de défaillance ou de perturbation d'un élément de réseau, par exemple noeud ou lien, afin d'éviter ou de limiter une discontinuité du service. Cette caractéristique est recherchée au moyen de différents matériels et procédés désignés généralement sous les noms de protection ou de restauration. La protection d'un réseau nécessite généralement un certain degré de redondance des ressources matérielles.

WO-A1-01056211 décrit un noeud de commutation optique comportant une matrice de commutation à cristaux liquides disposée en tant que module de protection partagé d'une pluralité de matrices de commutation à cristaux liquides disposées en tant que modules à protéger.

Un but de l'invention est d'améliorer la vitesse de reconfiguration d'un module de protection partagé. Un autre but de l'invention est d'améliorer la protection d'un noeud de commutation transparent, notamment contre la défaillance d'une matrice de commutation optique.

Pour cela, l'invention fournit un procédé de commande pour un module de traitement de longueurs d'ondes optiques disposé en tant que module de protection partagé d'une pluralité de modules de traitement de longueurs d'ondes optiques disposés en tant que modules à protéger, chacun desdits modules de traitement étant sélectivement configurable dans une pluralité d'états de configuration pour au moins un canal de longueur d'onde commun, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis, caractérisé par les étapes consistant à :
déterminer un état de configuration d'attente du module de protection partagé pour ledit canal de longueur d'onde en fonction des états de configuration des modules à protéger pour ledit canal de longueur d'onde,
et produire des signaux de commande pour configurer ledit module de protection dans ledit état de configuration d'attente pour ledit canal de longueur d'onde.

Selon un mode de réalisation particulier, ladite pluralité d'états de configuration du module de protection partagé comprend un état bloquant et un état passant pour ledit canal de longueur d'onde, ledit état de configuration du module de protection étant déterminé comme un état passant lorsqu'un nombre de modules à protéger dont l'état de configuration pour ledit canal de longueur d'onde est un état passant atteint ou dépasse un seuil inférieur positif, ledit seuil inférieur étant inférieur ou égal à la moitié du nombre total des modules à protéger. Par exemple, le seuil inférieur est égal à 1.

Selon un autre mode de réalisation particulier, ladite pluralité d'états de configuration du module de protection partagé comprend un état bloquant et un état passant pour ledit canal de longueur d'onde, ledit état de configuration du module de protection étant déterminé comme un état bloquant lorsqu'un nombre de modules à protéger dont l'état de configuration pour ledit canal de longueur d'onde est un état bloquant atteint ou dépasse un seuil supérieur positif, ledit seuil supérieur étant supérieur à la moitié du nombre total des modules à protéger.

Par exemple, le seuil supérieur est égal au nombre total des modules à protéger ; i.e. le module de protection partagé est dans un état bloquant seulement lorsque les états de configuration de tous les modules à protéger sont des états bloquants pour ledit canal de longueur d'onde.

Selon encore un autre mode de réalisation particulier, ladite pluralité d'états de configuration du module de protection comprend une pluralité d'états passants ayant des niveaux de gain respectifs pour ledit canal de longueur d'onde, ledit état de configuration du module de protection partagé étant déterminé comme un état passant lorsqu'un nombre de modules à protéger dont l'état de configuration pour ledit canal de longueur d'onde est un état passant atteint ou dépasse un seuil positif, ledit procédé comprenant l'étape consistant à :
déterminer un niveau de gain dudit état passant du module de protection partagé en fonction du ou des niveaux de gain dudit ou desdits modules à protéger dont l'état de configuration pour ledit canal de longueur d'onde est un état passant.

Le terme « gain » dans cette description recouvre les phénomènes d'amplification et les phénomènes d'atténuation. Le terme « gain » peut donc correspondre à des paramètres positifs, négatifs, supérieurs à 1 ou inférieurs à 1, selon le contexte de chaque cas d'application et les conventions numériques applicables.

Avantageusement, le niveau de gain du module de protection partagé est déterminé comme une somme pondérée des niveaux de gain des modules à protéger dont l'état de configuration est un état passant, par exemple une valeur moyenne. Les coefficients de pondérations peuvent être définis de manière plus ou moins complexe, notamment en fonction des propriétés des modules à protéger, par exemple un taux de panne du module correspondant.

D'autres fonctions sont aussi possibles pour le calcul du niveau de gain du module de protection partagé. Par exemple, si la technologie de contrôle de gain est asymétrique, à savoir qu'il est plus rapide de modifier le gain dans un sens que dans l'autre, le niveau de gain du module de protection partagé peut être déterminé comme le minimum ou le maximum des niveaux de gain des modules à protéger ou par toute autre fonction donnant une influence prédominante aux niveaux de gain les plus bas ou les plus hauts, selon que la modification est plus rapide dans le sens croissant ou décroissant.

Le nombre total des modules à protéger peut être quelconque. De préférence, le nombre total des modules à protéger est inférieur ou égal à 4, par exemple égal à 2.

Selon un mode de réalisation particulier, les signaux de commande incluent des instructions de configuration dudit module de protection. Par exemple, de telles instructions comprennent un identifiant du canal de longueur d'onde et/ou du port pour lequel l'état de configuration doit être réglé et des données définissant l'état de configuration à atteindre, ces données incluant par exemple une ou plusieurs variables logiques et/ou une description quantitative d'un niveau de gain à atteindre.

Selon un mode de réalisation particulier, lesdits signaux de commande incluent des signaux de pilotage dudit module de protection. Par exemple, de tels signaux de pilotage comprennent des instructions de bas niveau exploitables de manière plus directe par le module de traitement, par exemple décrivant des niveaux de courant ou de tension respectifs pour des composants de commutation ou d'atténuation correspondant aux différents canaux de longueurs d'ondes pour lesquels l'état de configuration doit être modifié.

De préférence, l'état de configuration d'attente est déterminé de manière répétée dans le temps en fonction de valeurs actualisées des états de configuration des modules à protéger. Par exemple, cette répétition peut suivre une période prédéfinie ou être déclenchée par des changements d'état de configuration des modules à protéger. Ainsi, le module de protection est reconfiguré de manière répétée, même s'il n'est pas réellement en service. Un bénéfice de cette répétition est d'éviter les dysfonctionnements liés à une inactivité trop prolongée du module de protection, par exemple un blocage mécanique.

L'invention fournit aussi un dispositif de traitement optique, comportant :
un premier module de traitement de longueurs d'ondes agencé pour recevoir un premier signal optique et sélectivement configurable dans une pluralité d'états de configuration, pour au moins un canal de longueur d'onde dudit premier signal optique, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis,
un deuxième module de traitement de longueurs d'ondes agencé pour recevoir un deuxième signal optique et sélectivement configurable dans une pluralité d'états de configuration, pour au moins un canal de longueur d'onde dudit deuxième signal optique, pour effectuer plusieurs traitements correspondants appartenant au groupe, comprenant bloquer ledit canal de longueur d'onde, transmettre ledit canal de longueur d'onde et transmettre ledit canal de longueur d'onde avec des niveaux de gain choisis, et
un troisième module de traitement de longueurs d'ondes sélectivement configurable dans une pluralité d'états de configuration, pour au moins un canal de longueur d'onde d'un signal optique reçu par ledit troisième module de traitement, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis, ledit troisième module de traitement étant agencé en tant que module de protection partagé des premier et deuxième modules de traitement.

De préférence, le dispositif comprend en outre :
des moyens de calcul aptes à déterminer un état de configuration d'attente du troisième module de traitement pour un canal de longueur d'onde commun auxdits premier et deuxième signaux optiques en fonction des états de configuration des premier et deuxième modules de traitement pour ledit canal de longueur d'onde commun,
et des moyens de commande aptes à configurer ledit troisième module de traitement dans ledit état de configuration d'attente pour ledit canal de longueur d'onde commun.

Selon des mode de réalisations particuliers, pouvant être combinés, une ou plusieurs des caractéristiques suivantes sont prévues :
- Le dispositif comporte des moyens de liaison optiques aptes à fournir lesdits premier et deuxième signaux optiques audit troisième module de traitement. Une seule liaison peut être prévue si c'est le même signal.
- Le dispositif comporte des moyens de liaison optiques sélectifs aptes à fournir sélectivement le premier signal optique ou le deuxième signal optique au troisième module de traitement.
- Le dispositif comporte un premier port d'entrée, une première section d'entrée s'étendant entre le premier port d'entrée et une entrée du premier module de traitement pour transmettre le premier signal optique, un deuxième port d'entrée et une deuxième section d'entrée s'étendant entre le deuxième port d'entrée et une entrée du deuxième module de traitement pour transmettre le deuxième signal optique, une première liaison d'entrée reliant la première section d'entrée au troisième module de traitement et une deuxième liaison d'entrée reliant la deuxième section d'entrée au troisième module de traitement.
- Le dispositif comporte un premier port de sortie, une première section de sortie s'étendant entre le premier port de sortie et une sortie du premier module de traitement, un deuxième port de sortie et une deuxième section de sortie s'étendant entre le deuxième port de sortie et une sortie du deuxième module de traitement, une première liaison de sortie reliant le troisième module de traitement à la première section de sortie et une deuxième liaison de sortie reliant le troisième module de traitement à la deuxième section de sortie.
- Le dispositif comporte un premier multiplexeur reconfigurable à insertion/extraction incluant un premier port d'entrée, un premier port de sortie et le premier module de traitement disposé entre le premier port d'entrée et le premier port de sortie, et un deuxième multiplexeur reconfigurable à insertion/extraction incluant un deuxième port d'entrée, un deuxième port de sortie et le deuxième module de traitement disposé entre le deuxième port d'entrée et le deuxième port de sortie.
- Le troisième ou chaque module de traitement inclut un bloqueur de longueurs d'ondes.
- Le troisième ou chaque module de traitement inclut un commutateur à sélection de longueurs d'ondes.
- Le troisième ou chaque module de traitement inclut un composant de type MEMS contrôlable pour modifier l'état de configuration du module de traitement.
- Le troisième ou chaque module de traitement inclut un composant à cristaux liquides contrôlable pour modifier l'état de configuration du module de traitement.

L'invention part du constat que, dans un schéma de protection partagée, les connaissances disponibles avant le déclenchement de la protection, au sujet de l'état de configuration dans lequel le module de protection pourra servir, sont de type statistique, par exemple liées aux probabilités de défaillance des modules de traitement à protéger. Les inventeurs se sont employés à définir un état de configuration d'attente pour un module de protection partagé, c'est-à-dire un état qui peut être utilisé dans l'attente d'une situation de déclenchement de protection. Une idée à la base de l'invention est qu'il est possible de bien choisir cet état de configuration d'attente pour obtenir des résultats avantageux, du moins de manière statistique, notamment en termes de temps de rétablissement du service lorsqu'une protection est déclenchée.

Selon un autre constat initial, nombre de composants optiques contrôlables employés pour différents traitements des signaux optiques, tels que la commutation, le contrôle de gain ou d'atténuation, le blocage et autres, reposent sur des propriétés physiques (position, réflectance, transmittance, indice effectif, longueur optique, effet retard) dont la dynamique de réglage n'est pas instantanée et/ou n'est pas régulière. Une autre idée à la base de l'invention est qu'il est possible d'accélérer la configuration d'un module de traitement de longueurs d'ondes optiques en tenant compte des spécificités dynamiques des composants optiques employés.

Certains aspects de l'invention sont fondés sur le constat qu'un module de traitement de longueurs d'ondes optiques, par exemple une matrice de commutation, peut présenter un comportement asymétrique quant à la vitesse de transition entre états de configuration, selon les technologies employées. Dans certaines technologies de commutation, notamment lorsque des parties mobiles ou déformables sont impliquées, l'établissement d'un état bloqué peut être plus rapide que l'établissement d'un état passant en raison de processus de stabilisation qui doivent être effectués pour établir un état passant, afin d'obtenir un signal transmis de qualité satisfaisante, mais qui ne sont pas nécessaires pour établir un état bloqué. Une autre idée à la base de l'invention est de chercher à accroître la probabilité des transitions les plus rapides et/ou réduire la probabilité des transitions les plus lentes.

D'autres aspects de l'invention sont fondés sur le constat que certains composants optiques contrôlables employés pour différents traitements des signaux optiques ont des propriétés physiques réglables sur des plages étendues, de manière continue ou discrète. Le temps de transition du composant entre deux états dépend donc de l'ampleur de la transition. Une autre idée à la base de l'invention est de chercher à réduire statistiquement l'étendue des transitions à effectuer par de tels composants.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
La figure 1 est une représentation fonctionnelle d'un noeud de commutation optique selon un mode de réalisation de l'invention,
La figure 2 est un diagramme d'étapes représentant un calcul d'état de commutation effectué dans le noeud de commutation de la figure 1,
La figure 3 est une représentation fonctionnelle d'un contrôleur électronique de bas niveau du noeud de commutation de la figure 1,
La figure 4 est une représentation fonctionnelle d'un contrôleur électronique de haut niveau du noeud de commutation de la figure 1.

La description qui va suivre porte sur un mode de réalisation d'un noeud de commutation optique incluant plusieurs modules de commutation de longueurs d'ondes disposés en tant que modules de service et un module de commutation de longueurs d'ondes disposé en tant que module de protection partagé de plusieurs des modules de service. Un module de protection d'un module de service désigne ici un module capable d'être utilisé pour remplir une ou plusieurs fonctions identiques ou similaires à celles du module de service à protéger lorsque ce dernier n'est plus en mesure de les remplir de manière satisfaisante, par exemple en cas de panne du module à protéger. La protection est déclenchée lorsque le module de protection doit effectivement servir à compenser une insuffisance ou incapacité fonctionnelle du module à protéger, par exemple en étant fonctionnellement substitué au module à protéger, de manière à effectuer le même traitement produisant le ou les mêmes signaux de sortie que si le module à protéger défectueux était pleinement opérationnel. Le module de protection partagé est destiné à protéger plusieurs modules de manière mutualisée. Le module de protection partagé présente des capacités fonctionnelles inférieures aux capacités cumulées de tous les modules qu'il est destiné à protéger, c'est-à-dire qu'il n'est pas capable de se substituer simultanément à tous les modules à protéger pour offrir les mêmes services que ceux-ci.

Les modules à protéger peuvent être identiques ou différents les uns des autres. De préférence, le module de protection et chaque module à protéger sont identiques, ou du moins équivalents quant à leurs fonctionnalités, mais ce n'est pas indispensable. Un module de protection peut présenter des capacités fonctionnelles plus étendues qu'un module à protéger. De préférence, le module de protection présente des capacités fonctionnelles au moins équivalentes au module à protéger ayant les capacités fonctionnelles les plus étendues. Alternativement, un module de protection peut présenter des capacités fonctionnelles moins étendues qu'un module à protéger, auquel cas l'activation du module de protection pourrait conduire à un fonctionnement dégradé du système.

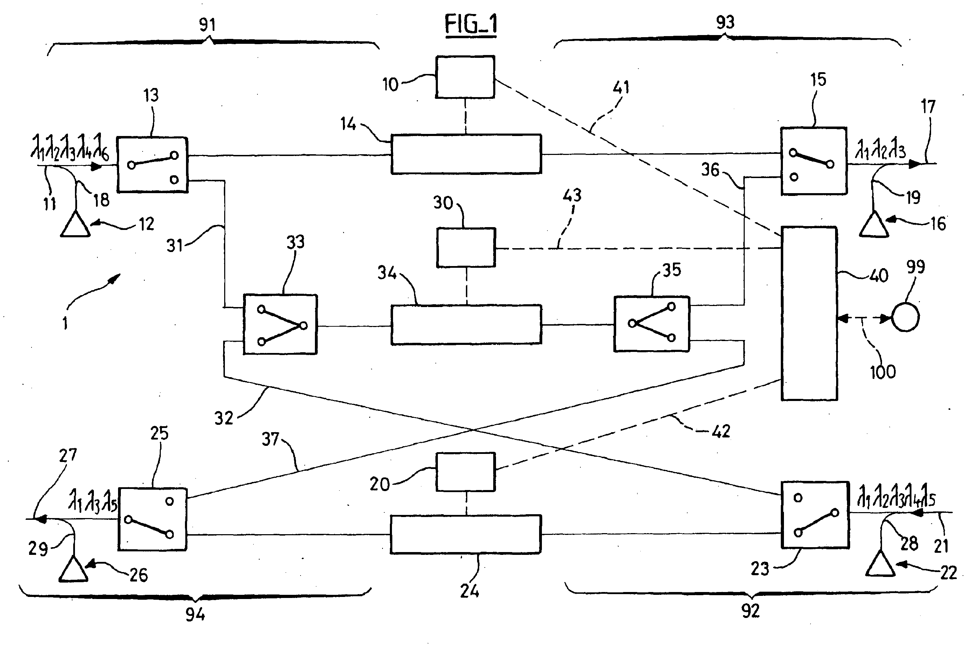

Sur l'exemple de la figure 1, le noeud de commutation optique 1 comporte une combinaison de deux multiplexeurs reconfigurable à insertion/extraction (ROADM) basés sur des modules bloqueurs de longueurs d'ondes. Un tel noeud peut être utilisé par exemple pour traiter deux flux optiques allant dans deux directions opposées dans un réseau en anneau ou autre. Par convention, sur la figure 1, les traits continus représentent des liaisons optiques, par exemple fibres optiques, guides d'ondes, optique intégrée ou autres, et les traits interrompus représentent des liaisons de commande, par exemple électriques ou autres.

On décrit d'abord la partie optique du noeud 1. Un premier ROADM présente un port d'entrée 11, un port de sortie 17, un module bloqueur de longueurs d'ondes 14, une section optique d'entrée 91 reliant le port d'entrée 11 à l'entrée du module 14, une section optique de sortie 93 reliant la sortie du module 14 au port de sortie 17, un module d'extraction 12 connecté à la section d'entrée 91 par un coupleur 18 pour prélever une fraction du signal optique d'entrée et un module d'insertion 16 connecté à la section de sortie 93 par un combineur optique 19. Un second ROADM présente un port d'entrée 21, un port de sortie 27, un module bloqueur de longueurs d'ondes 24, une section optique d'entrée 92 reliant le port d'entrée 21 à l'entrée du module 24, une section optique de sortie 94 reliant la sortie du module 24 au port de sortie 27, un module d'extraction 22 connecté à la section d'entrée 92 par un coupleur 28 pour prélever une fraction du signal optique d'entrée et un module d'insertion 26 connecté à la section de sortie 94 par un combineur optique 29. Le module d'extraction 12, 22 sert à extraire des canaux optiques sélectionnés du signal optique d'entrée correspondant. Le module d'insertion 16, 26 sert à ajouter des canaux optiques au signal optique qui sort du module bloqueur de longueurs d'ondes 14, 24. Le module bloqueur de longueurs d'ondes 14, 24 sert à sélectionner des canaux à transmettre dans le signal optique d'entrée correspondant, à effectuer une optimisation d'amplitude sur ces canaux et à bloquer les canaux du signal d'entrée qui ne doivent pas être transmis. Les fonctionnalités et d'autres détails d'implémentation d'un ROADM basé sur un bloqueur de longueurs d'ondes 51 sont décrits dans la littérature, par exemple dans US-A-20030002104.

L'optimisation spectrale peut être une égalisation des canaux ou un équilibrage des canaux selon des rapports d'amplitude prédéfinis, par exemple en fonction de la réponse spectrale des amplificateurs optiques présents dans le noeud.

Pour la protection des modules bloqueurs de longueurs d'ondes 14 et 24, le noeud 1 comporte un module bloqueur de longueurs d'ondes additionnel 34 qui est disposé de manière à pouvoir être sélectivement substitué à chacun des modules 14 et 24 pour traiter leur signal d'entrée respectif. Pour cela, le module bloqueur de longueurs d'ondes 34 présente des liaisons optiques connectées au premier ROADM par des coupleurs, combineurs et/ou commutateurs en contournement du module 14 et des liaisons optiques connectées au second ROADM par des coupleurs, combineurs et/ou commutateurs en contournement du module 24. Plus précisément, une entrée du module 34 est reliée à un combineur 33 de type 1×2 et une sortie du module 34 est reliée à un coupleur 35 de type 1x2. Depuis le premier ROADM, une ligne d'entrée 31 s'étend entre un commutateur sélectif 13 de type 1×2 interposé sur la section d'entrée 91 et le combineur 33. Depuis le second ROADM, une ligne d'entrée 32 s'étend entre un commutateur sélectif 23 de type 1×2 interposé sur la section d'entrée 92 et le combineur 33. Depuis le coupleur 35, une ligne de sortie 36 rejoint la section de sortie 93 au niveau d'un commutateur sélectif 15 de type 1x2 et une ligne de sortie 37 rejoint la section de sortie 94 au niveau d'un commutateur sélectif 25 de type 1x2. Sur la figure 1, les commutateurs sélectifs 13 et 15 (respectivement 23 et 25) sont positionnés dans un état où le module 14 (respectivement 24) est en service. Le premier ROADM (respectivement second) n'envoie aucun signal vers et ne reçoit aucun signal du module 34.

On décrit maintenant la partie commande du noeud 1. Les trois modules 14, 24 et 34 sont supposés identiques. Pour chacun d'eux le bloc 10, 20 ou 30 désigne un contrôleur de bas niveau, qui peut être généralement packagé de manière unitaire avec la matrice optique correspondante. Les contrôleurs 10, 20 et 30 sont reliés à un contrôleur de noeud 40 par des liaisons de données 41, 42 et 43.

Dans un état de fonctionnement normal du noeud, le module 34 est configuré dans un état d'attente et n'est pas utilisé pour traiter le trafic. Le routage des canaux depuis le port d'entrée 1 (respectivement 21) vers le port de sortie 17 (respectivement 27) est effectué essentiellement par le module 14 (respectivement 24) en fonction d'instructions fournies par le contrôleur de noeud 40 au contrôleur de bas niveau 10 (respectivement 20). Le contrôleur de noeud 40 présente des liaisons 100 avec des dispositifs extérieurs 99, par exemple un système de gestion du réseau et/ou d'autres contrôleurs de noeuds.

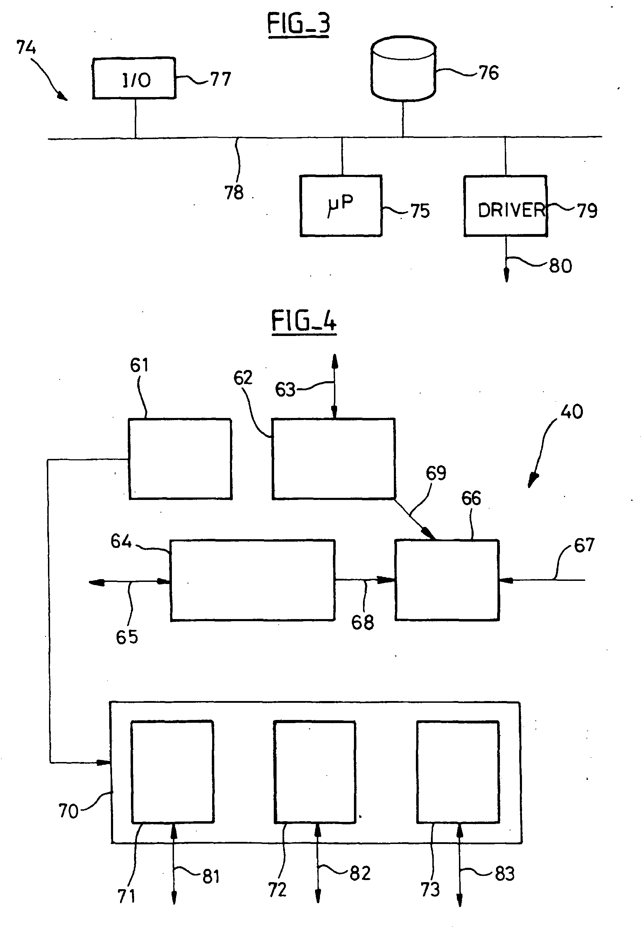

Les fonctions du contrôleur de noeud 40 sont maintenant décrites plus précisément en référence à la figure 4. Un module de détermination des états de commutation 61 a pour fonction générale de définir les états de commutation dans lesquels les modules 14, 24 et 34 doivent être configurés à un instant donné. Pour cela, le module 61 coopère avec un module de routage et de signalisation 62, un module de surveillance optique 64 et un module de gestion de la protection 66. Le module 62 est apte à mettre en oeuvre des procédés connus dans le domaine du routage et de la signalisation dans les réseaux WDM. Le module 62 contrôle la transmission et la réception des instructions de signalisation relatives aux connexions à établir, modifier ou supprimer, comme indiqué par la flèche 63. Le module de surveillance optique 64 reçoit des informations de mesure obtenues par des capteurs (non représentés) en différents points du noeud, comme indiqué par la flèche 65, et surveille ainsi l'état des signaux, par exemple pour superviser le contrôle du gain, l'optimisation spectrale et la détection et la localisation des fautes dans le noeud. Le module de gestion de la protection 66 détecte des situations de défaillance et contrôle le déclenchement et la mise en oeuvre de la protection des modules 14 et 24. Un module d'interfaçage 70 contrôle l'échange des données et instructions avec les contrôleurs de bas niveau dans des formats ou langages appropriés. Plus précisément, il comporte une interface 71 communiquant avec le contrôleur 10 comme indiqué par la flèche 81, une interface 72 communiquant avec le contrôleur 20 comme indiqué par la flèche 82 et une interface 73 communiquant avec le contrôleur 30 comme indiqué par la flèche 83.

Le contrôleur de bas niveau 10, 20 ou 30 est conçu pour effectuer au moins l'étape consistant à traduire un état de commutation à atteindre en des signaux de pilotage pour les composants réglables ou commutables de la matrice optique, à savoir pour piloter les composants optiques de manière à placer la matrice optique dans un état de commutation souhaité. L'état de commutation à atteindre est ici défini par des instructions de commande reçues par le contrôleur de bas niveau 10, 20 ou 30 depuis le contrôleur de noeud 40. Des protocoles convenant pour communiquer avec le contrôleur de bas niveau sont par exemple Simple Network Management Protocol ou Command Line Interface ou des langages de plus bas niveau. Lorsqu'un état de commutation à atteindre est défini, le contrôleur de bas niveau est capable de calculer les transitions d'états devant être effectuées par les composants optiques, le cas échéant, et de transmettre des signaux électriques de pilotage correspondants aux composants optiques. Pour réaliser ces fonctions, le contrôleur de bas niveau peut être réalisée sous la forme d'un contrôleur électronique programmable 74, visible sur la figure 3, incluant essentiellement un microprocesseur 75, une mémoire 76, des interfaces d'entrée/sortie 77, par exemple du type port série, des circuits de pilotage 79 et un réseau de bus 78 interconnectant ces composants. Les circuits de pilotage 79 comportent l'électronique de puissance et les convertisseurs numérique-analogique pour produire les signaux de pilotage proprement dits, comme indiqué par la flèche 80. Le microprocesseur 75 et la mémoire 76 comportent les moyens matériels et logiciels pour déterminer, en fonction des instructions définissant un état de commutation à atteindre, les transitions d'états devant être effectuées par les composants optiques.

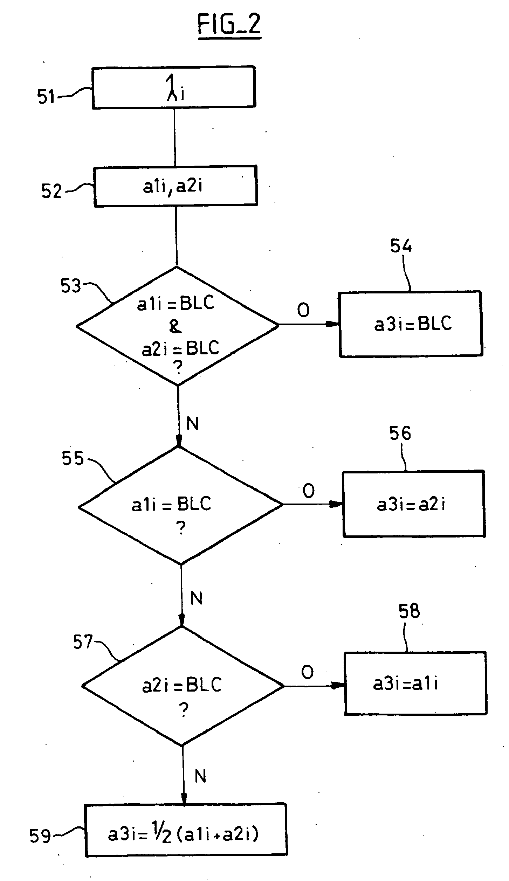

Dans un état de fonctionnement normal du noeud, le module de détermination des états de commutation 61 calcule en permanence les états de commutation des bloqueurs de longueurs d'ondes 14 et 24 en fonction des connexions à établir et des niveaux de signal à régler. Le noeud est adapté à une grille de canaux de longueurs d'ondes. Pour chaque canal λi, le bloqueur de longueurs d'ondes peut prendre un état bloqué (désigné par BLC sur la figure 2) ou un état passant avec une atténuation réglable dans une plage prédéfinie, par exemple entre 0 et -20 dB. Ces états sont obtenus à l'aide de microactionneurs correspondants dans la matrice optique. Par microactionneur, on désigne ici un composant élémentaire ou une portion élémentaire de composant optique contrôlable pour traiter un signal optique élémentaire selon la granularité de la matrice optique, par exemple un canal de longueur d'onde. Selon la technologie du bloqueur de longueur d'onde, un microactionneur peut inclure un dispositif microélectromécanique MEMS, une cellule à cristaux liquides ou d'autres composants. Des bloqueurs de longueurs d'ondes et commutateurs à sélection de longueurs d'ondes basés sur des microactionneurs MEMS sont par exemple disponibles auprès de JDS Uniphase Corp. et Metconnex Canada Inc. Des bloqueurs de longueurs d'ondes et commutateurs à sélection de longueurs d'ondes basés sur des microactionneurs à cristaux liquides sont par exemple disponibles auprès de Engana Pty Ltd, Australie.

Les instructions définissant un état de commutation à atteindre peuvent par exemple être transmises à travers les interfaces 71, 72 ou 73 et 77 sous la forme d'une série d'informations incluant, pour chaque microactionneur à reconfigurer, un numéro ou identificateur du microactionneur ou du canal de longueur d'onde correspondant, et l'état de commutation à atteindre. Ces instructions sont avantageusement fournies sous la forme d'une liste ou d'un tableau d'informations rangées par microactionneur ou par canal de longueur d'onde. Par l'intermédiaire du module 62, le module 61 a accès à des informations actualisées définissant les longueurs d'ondes qui sont reçues et traitées par un ROADM à un instant donné.

Le module de détermination des états de commutation 61 calcule aussi en permanence un état de commutation d'attente pour le bloqueur de longueurs d'ondes de protection 34. Pour cela, le procédé illustré sur la figure 2 est appliqué. A l'étape 51, un canal λi est sélectionné parmi les canaux de longueurs d'ondes qui sont traités par les deux bloqueurs de longueurs d'ondes 14 et 24. Un canal de longueur d'onde λi est dit commun aux deux bloqueurs de longueurs d'ondes 14 et 24 lorsque les deux bloqueurs reçoivent des signaux optiques incluant cette longueur d'onde. Les données portées par ce canal peuvent être différentes dans les deux bloqueurs. A l'étape 52, les états de commutation des deux bloqueurs de longueurs d'ondes 14 et 24 pour ce canal, désignés par a1i et a2i respectivement, sont lus dans une mémoire du contrôleur 40. A l'étape 53, on teste si les deux modules à protéger bloquent ce canal. Dans l'affirmative, à l'étape 54, l'état d'attente pour ce canal, désigné par a3i, est fixé à la valeur bloquée BLC. Dans la négative, à l'étape 55, on teste si le premier module à protéger 14 bloque ce canal. Dans l'affirmative, à l'étape 56, l'état d'attente pour ce canal est fixé à la valeur d'état de l'autre module à protéger 24, a2i, qui est une valeur passante avec un certain niveau d'atténuation. Dans la négative, à l'étape 57, on teste si le deuxième module à protéger 24 bloque ce canal. Dans l'affirmative, à l'étape 58, l'état d'attente pour ce canal est fixé à la valeur d'état de l'autre module à protéger 14, a1i, qui est une valeur passante avec un certain niveau d'atténuation. Dans la négative, à l'étape 59, l'état d'attente pour ce canal est fixé à la valeur moyenne des deux modules à protéger 14 et 24, à savoir une valeur passante avec un niveau d'atténuation qui est la moyenne des niveaux d'atténuation des deux modules à protéger. Lorsque l'état d'attente a3i est fixé pour un canal, le procédé reprend à l'étape 51 pour un autre canal commun s'il en reste. Le tableau 1 donne un exemple d'état d'attente obtenu selon ce procédé à partir de deux états de commutation pour les canaux λ1 à λ4.

**Tableau 1 : exemple d'états de commutation des bloqueurs de longueurs d'ondes de la Fig. 1. X signifie que cette longueur d'onde n'est pas reçue par le bloqueur.**

| Longueur d'onde du canal | λ1 | λ2 | λ3 | λ4 | λ5 | λ6 |
|---|---|---|---|---|---|---|
| Etat de commutation du bloqueur 14 | BLC | -5 dB | -3 dB | BLC | X | BLC |
| Etat de commutation du bloqueur 24 | -3 dB | BLC | -5 dB | BLC | 0 dB | X |
| Etat de commutation d'attente | -3 dB | -5 dB | -4 dB | BLC | 0 dB | BLC |

Cet état de commutation d'attente constitue la configuration à partir de laquelle la reconfiguration vers l'un quelconque des états de commutation courants des modules à protéger est statistiquement la plus rapide. En effet, à partir du niveau d'atténuation moyen a3i obtenu à l'étape 59, l'amplitude de la transition d'état du microactionneur correspondant vers le niveau d'atténuation a1i ou a2i est minimisée. De plus, la transition d'état d'un microactionneur depuis l'état passant obtenu à l'étape 54 ou 56 vers l'état bloquant BLC, le cas échéant, est généralement plus rapide que la transition inverse. Par exemple, dans une matrice optique à technologie MEMS, des micromiroirs doivent être stabilisés dans un état passant, ce qui ralentit la transition vers l'état passant.

Le procédé de la figure 2 peut être adapté de plusieurs manières à un schéma de protection 1:N avec N>2. Par exemple, si les états de commutation des N modules à protéger pour le canal commun λi sont bloqués, l'état d'attente est bloqué, sinon l'état d'attente est un état passant dont le niveau d'atténuation est la moyenne des niveaux d'atténuation des modules à protéger qui ne sont pas bloqués.

S'il existe un canal de longueur d'onde qui n'est pas traité par tous les modules à protéger, plusieurs approches peuvent être suivies pour calculer l'état d'attente pour ce canal. Une approche serait de calculer l'état d'attente comme pour un canal commun. Une autre approche, pour un schéma de protection 1:N avec N>2, consiste à calculer l'état d'attente comme pour un canal commun en excluant des tests et des calculs le ou les modules à protéger qui ne traitent pas ce canal. Une autre approche, illustrée dans le tableau 1 pour les canaux λ5 et λ6, consiste à prendre pour état d'attente l'état de commutation de l'unique module à protéger qui traite ce canal.

Les états de commutation déterminé par le module 61 sont transmis aussi souvent que nécessaire aux contrôleurs de bas niveau 10, 20 et 30 respectivement, qui configurent les matrices optiques de manière correspondante. Par exemple, l'état d'attente est recalculé et communiqué au bloqueur 34 chaque fois qu'un des bloqueurs à protéger 14 et 24 est reconfiguré pour au moins un canal. Ainsi, le bloqueur 34 de protection est en permanence dans un état d'attente qui optimise statistiquement le temps de reconfiguration vers l'état de commutation de l'un quelconque des modules à protéger.

En réponse à la détection d'une situation de défaillance d'un des bloqueurs à protéger, par exemple ici le bloqueur 14, le module de gestion de la protection 66 active la protection en transmettant des instructions de reconfiguration au contrôleur 30. Ces instructions entraînent une reconfiguration du bloqueur 34 dans un état de commutation équivalent à l'état de commutation du module 14. Le module 66 commande aussi les commutateurs 13 et 15 pour rediriger le signal d'entrée du bloqueur 14 vers le bloqueur 34 et connecter la sortie du bloqueur 34 à la sortie du premier ROADM. Les commutateurs sélectifs 13 et 15 (respectivement 23 et 25) sont commandés de manière à commuter simultanément.

Le module 66 peut détecter une situation nécessitant d'activer la protection de plusieurs façons. Par exemple, un ordre de protection peut être transmis par un message de signalisation, comme indiqué par la flèche 69, par exemple depuis un système de gestion de réseau. Un signal d'alerte peut aussi être transmis par le module de surveillance optique 64, comme indiqué par la flèche 68, ou directement par un module à protéger ayant une fonction de détection de panne intégrée, comme indiqué par la flèche 67. Pour cela, un bloqueur de longueurs d'ondes inclut par exemple un dispositif de surveillance des canaux apte à mesurer des caractéristiques des canaux de longueurs d'ondes, par exemple la puissance, en différents points du bloqueur, par exemple des ports, et une unité logique apte à détecter un état anormal à partir de ces mesures, par exemple une perte de signal, et à produire un signal d'alerte correspondant.

Ainsi, le bloqueur 34 est fonctionnellement substitué au module défaillant 14 pour rétablir le service au niveau du port 17. Ce rétablissement doit être effectué le plus rapidement possible. L'état d'attente dans lequel est préconfiguré le module de protection partagé contribue à accélérer ce rétablissement.

Pour communiquer l'état de commutation à atteindre, le contrôleur de noeud 40 peut transmettre des instructions correspondantes au contrôleur de bas niveau 30 au moment d'activer la protection. Pour que la reconfiguration soit encore plus rapide, il peut être intéressant, en variante, de maintenir en permanence dans la mémoire du contrôleur de bas niveau 30 un enregistrement de l'état de commutation courant de chacun des modules à protéger. Le contrôleur 40 envoie pour cela des instructions correspondantes de mise à jour, périodiquement ou à chaque fois qu'un module à protéger est reconfiguré. Ainsi, le contrôleur 30 n'a plus qu'à lire ces informations dans sa mémoire locale lorsque la protection doit être activée. Le contrôleur 30 peut aussi, dans ce cas, précalculer et stocker les caractéristiques des signaux de pilotage qui devront être employés, le cas échéant, au moment d'activer la protection. Ainsi, lorsque le contrôleur 40 détecte ou est informé d'une défaillance, il lui suffit de transmettre au contrôleur de bas niveau 30 un ordre de protection désignant le module défaillant. En raison de la plus faible quantité de données à transmettre et/ou des précalculs effectués, la reconfiguration du module de protection peut être encore plus rapide.

Un état d'attente peut être défini et utilisé de manière correspondante pour un schéma de protection partagée 1:N avec N entier positif quelconque≥ 2, de préférence sans trafic additionnel dans le module de protection. Par exemple, l'architecture de la figure 1 s'adapte facilement à N>2 en utilisant un combineur 33 et un coupleur 35 de type 1 xN. Un état d'attente peut être défini et utilisé de manière correspondante dans des noeuds de commutation de degré quelconque et d'architecture quelconque. La figure 1 ne saurait être considérée limitative à cet égard.

Dans un autre mode de réalisation, le contrôleur de noeud 40 ne gère pas le contrôle de gain et transmet aux bloqueurs de longueurs d'ondes des instructions de configuration et de reconfiguration qui ne prennent que deux valeurs pour chaque canal, à savoir état passant ou état bloqué. Le procédé de la figure 2 peut être adapté à un tel cas, dans lequel l'état de commutation pour un canal de longueur d'onde est défini de manière binaire, i.e. soit passant, soit bloqué. Pour cela, au niveau de l'étape 55, l'état de commutation d'attente a3i est fixé à la valeur passante sans test supplémentaire. Dans ce mode de réalisation, le contrôle de gain peut être géré individuellement par chaque contrôleur de bas niveau à partir des mesures des signaux optiques prises dans le bloqueur. Lorsque l'état d'attente pour un canal est l'état passant, le contrôleur de bas niveau 30 peut appliquer un gain moyen prédéfini. La fonction d'optimisation spectrale gérée par le contrôleur de bas niveau 30 est mise en oeuvre une fois qu'un signal optique est effectivement présent dans le module de protection, c'est-à-dire lorsque la protection est activée.

Bien que les modes de réalisation ci-dessus fassent référence à des bloqueurs de longueurs d'ondes, l'homme du métier constatera que les mêmes procédés de commande peuvent être appliqués dans d'autres types de modules de traitement de longueurs d'ondes présentant un nombre plus ou moins élevé de ports, un nombre plus ou moins élevé d'états de configuration distincts et des fonctionnalités plus ou moins riches que les bloqueurs de longueurs d'ondes, par exemple les commutateurs à sélection de longueurs d'ondes (WSS). Encore d'autres exemples de modules de traitement de longueurs d'ondes sont des matrices de commutation optiques plus simples, aptes à commuter sur un ou plusieurs ports de sortie des canaux de longueurs d'ondes qu'elles reçoivent de manière séparée sur des ports d'entrée, sans intégrer une fonction de démultiplexage des canaux.

Un noeud optique dans lequel les modules à protéger et le module de protection partagé sont des commutateurs à sélection de longueurs d'ondes est divulgué dans la demande FR 0653675 déposée le 12 septembre 2006. Dans un tel cas, l'état d'attente du module de protection pour un canal de longueur d'onde peut être calculé en fonction du port sélectionnable vers lequel ce canal est dirigé dans chaque module à protéger, et éventuellement en fonction des niveaux de gain respectifs. Par exemple, si un canal est passé vers un port sélectionnable par le premier module à protéger et passé vers un autre port sélectionnable par le second module à protéger, l'état d'attente pour ce canal peut inclure une orientation intermédiaire du micromiroir correspondant dans le module de protection, permettant d'optimiser le temps de commutation vers l'un ou l'autre des deux ports sélectionnables précités.

Par module de traitement de longueurs d'ondes, on entend un équipement capable d'effectuer un ou plusieurs traitements, comme passer, bloquer, atténuer, amplifier ou polariser, sur un ou plusieurs canaux de longueurs d'ondes. Un tel équipement est capable de traiter des signaux optiques avec une granularité pouvant être un canal de longueur d'onde individuel ou une granularité supérieure, par exemple un groupe de canaux, une bande spectrale, une fibre optique ou autre. On notera que, dans le cas d'une granularité supérieure, un état de configuration ou de commutation pour un signal optique incluant une pluralité de canaux définit implicitement un état de configuration ou de commutation pour un quelconque canal de longueur d'onde de la pluralité.

L'état de configuration pour un canal de longueur d'onde désigne la configuration physique du ou des éléments d'un module de traitement qui affectent la nature et/ou les paramètres d'un traitement subi par ce canal de longueur d'onde dans le module. La relation logique entre une commande adressée à un module de traitement de longueurs d'ondes et un canal de longueur d'onde peut être directe, par exemple lorsqu'une instruction de commande désigne explicitement un ou plusieurs canaux de longueurs d'ondes devant être affectés par cette commande. Cette relation peut aussi être indirecte, par exemple lorsqu'une commande est destinée à configurer un élément matériel particulier du module de traitement et que cet élément matériel est responsable du traitement d'un signal optique particulier contenant ce canal.

Certains des éléments représentés, notamment les contrôleurs 10, 20, 30 et 40 et le système de gestion de réseau 99 peuvent être réalisés sous différentes formes, de manière unitaire ou distribuée, au moyen de composants matériels et/ou logiciels. Des composants matériels utilisables sont les circuits intégrés spécifiques ASIC, les matrices programmables FPGA ou les microprocesseurs. Des composants logiciels peuvent être écrits dans différents langages de programmation, par exemple C, C++, Java ou VHDL. Cette liste n'est pas exhaustive.

Les fonctions décrites en référence au contrôleur de noeud 40 et au contrôleur de bas niveau 10, 20 ou 30 pourraient être effectuées de manière plus centralisée, par exemple dans un unique contrôleur, ou pourraient être réparties de manière différente entre une pluralité de contrôleur. L'architecture préférée décrite n'est pas limitative à cet égard.

Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément, signal ou état ou une étape, opération ou entité n'exclut pas, sauf mention contraire, la présence d'une pluralité de tels éléments, signaux, états, étapes, opérations ou entités. Plusieurs unités ou modules peuvent être représentés par un même élément matériel.

Dans les revendications, tout chiffre de référence entre parenthèses ne saurait être interprété comme une limitation de la revendication.

## Revendications

1. Procédé de commande pour un module de traitement de longueurs d'ondes optiques (34) disposé en tant que module de protection partagé d'une pluralité de modules de traitement de longueurs d'ondes optiques (14, 24) disposés en tant que modules à protéger, chacun desdits modules de traitement étant sélectivement configurable dans une pluralité d'états de configuration pour au moins un canal de longueur d'onde commun, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis, **caractérisé par** les étapes consistant à :
déterminer (54, 56, 58, 59) un état de configuration d'attente du module de protection partagé pour ledit canal de longueur d'onde en fonction des états de configuration des modules à protéger pour ledit canal de longueur d'onde,
et produire des signaux de commande (80, 83) pour configurer ledit module de protection dans ledit état de configuration d'attente pour ledit canal de longueur d'onde.

2. Procédé selon la revendication 1, **caractérisé par le fait que** ladite pluralité d'états de configuration du module de protection partagé comprend un état bloquant et un état passant pour ledit canal de longueur d'onde, ledit état de configuration du module de protection étant déterminé comme un état passant (56, 58, 59) lorsqu'un nombre de modules à protéger dont l'état de configuration pour ledit canal de longueur d'onde est un état passant atteint ou dépasse un seuil inférieur positif, ledit seuil inférieur étant inférieur ou égal à la moitié du nombre total des modules à protéger.

3. Procédé selon la revendication 1 ou 2, **caractérisé par le fait que** ladite pluralité d'états de configuration du module de protection partagé comprend un état bloquant et un état passant pour ledit canal de longueur d'onde, ledit état de configuration du module de protection étant déterminé comme un état bloquant (54) lorsqu'un nombre de modules à protéger dont l'état de configuration pour ledit canal de longueur d'onde est un état bloquant atteint ou dépasse un seuil supérieur positif, ledit seuil supérieur étant supérieur à la moitié du nombre total des modules à protéger.

4. Procédé selon l'une des revendications 1 à 3, **caractérisé par le fait que** ladite pluralité d'états de configuration du module de protection comprend une pluralité d'états passants ayant des niveaux de gain respectifs pour ledit canal de longueur d'onde, ledit état de configuration du module de protection partagé étant déterminé comme un état passant lorsqu'un nombre de modules à protéger dont l'état de configuration pour ledit canal de longueur d'onde est un état passant atteint ou dépasse un seul positif, ledit, procédé comprenant l'étape consistant à :
déterminer un niveau de gain dudit état passant du module de protection partagé en fonction du ou des niveaux de gain dudit ou desdits modules à protéger dont l'état

5. Procédé selon la revendication 4, **caractérisé par le fait que** ledit niveau du gain du module de protection partagé est déterminé comme une somme pondérée des niveaux de gain des modules à protéger dont l'état de configuration

6. Procédé selon l'une des revendications 1 à 5, **caractérisé par le fait que** l'état de configuration d'attente est déterminé de manière répétée dans le temps en fonction de valeurs actualisées des états de configuration des modules à protéger.

7. Dispositif de traitement optique, comportant:
un premier module de traitement de longueurs d'ondes (14) agencé pour recevoir un premier signal optique et sélectivement configurable dans une pluralité d'états de configuration, pour au moins un canal de longueur d'onde dudit premier signal optique, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis,
un deuxième module de traitement de longueurs d'ondes (24) agencé pour recevoir un deuxième signal optique et sélectivement configurable dans une pluralité d'états de configuration, pour au moins un canal de longueur d'onde d'or dudit deuxième signal optique, pour effectuer plusieurs traitements correspondants appartenant au groupe comprenant bloquer ledit canal de longueur d'onde, transmettre ledit canal de longueur d'onde et transmettre ledit canal de longueur d'onde avec des niveaux de gain choisis,
un troisième module de traitement de longueurs d'ondes (34) sélectivement configurable dans une pluralité d'états de configuration, pour au moins un canal de longueur d'onde d'un signal optique: reçu par troisième module de traitement, pour effectuer plusieurs traitements correspondants appartenant au groupe comprenant bloquer ledit canal de longueur d'onde, transmettre ledit canal de longueur d'onde et transmettre ledit, canal de longueur d'onde avec des niveaux de gain choisis, ledit troisième module de traitement étant agencé en tant que module de protection partagé des premier et deuxième modules de traitement,
**caractérisé par le fait que** ledit dispositif comporte
des moyens de calcul (30, 40) aptes à determiner un état de configuration d'attente du troisième module de traitement pour un canal de longueur d'onde commun auxdits premier et deuxième signaux optiques en fonction des états de configuration des premier et deuxième modules de traitement pour ledit canal de longueur d'onde commun, et
des moyens de commande (30, 40) optes à configurer ledit troisième module de traitement dans ledit état de configuration d'attente pour ledit canal de longueur d'onde commun.

8. Dispositif de traitement optique selon la revendication 7, **caractérisé par le fait qu'**il comporte un premier multiplexeur reconfigurable à insertion/extraction incluant un premier port d'entrée (11), un premier port de sortie (17) et le premier module de traitement (14) disposé entre le premier port d'entrée et le premier port de sortie, et un deuxième multiplexeur reconfigurable à insertion/extraction incluant un deuxième d'entrée (21), un deuxième port de sortie (27) et le deuxième module de traitement (24) disposé entre le deuxième port d'entrée et le deuxième port de sortie.

9. Dispositif de traitement optique selon on l'une des revendications 7 à 8, **caractérisé par le fait que** le troisième module de traitement (34) inclut un bloqueur de longueurs d'ondes.

10. Dispositif de traitement l'une des revendications 7 à 8, **caractérisé par le fait que** le troisième module de traitement (34) inclut un commutateur à sélection on de longueurs d'ondes.

11. Dispositif de traitement optique selon l'une des revendications 7 à 10, **caractérisé par le fait que** le troisième module de traitement (34) inclut un composant de type MEMS contrôlable pour modifier l'état de configuration du module de traitement.

12. Dispositif de traitement optique selon l'une des revendications 7 à 11, **caractérisé par le fait que** le troisième module de traitement (34) inclut un composant à cristaux liquides contrôlable pour modifier l'état de configuration du module de traitement.

## Claims

1. A method for controlling an optical wavelength processing module (34) operative as a shared protection module of a plurality of optical wavelength processing modules (14, 24) operative as modules to be protected, each of said processing modules being selectively configurable into a plurality of configuration states for at least one common wavelength channel, in order to carry out multiple corresponding processing actions belonging to the group that comprises blocking said wavelength channel, transmitting said wavelength channel, and transmitting said wavelength channel with chosen gain levels, **characterized by** the steps consisting of:
determining (54, 56, 58, 59) a queue configuration state of the shared protection module for said wavelength channel as a function of the configuration states of the modules to be protected for said wavelength channel, and producing control signals (80, 83) to configure said protection module into said queue configuration state for said wavelength channel.

2. A method according to claim 1, **characterized by** the fact that said plurality of configuration states of the shared protection module comprises a blocking state and a pass-through state for said wavelength channel, said configuration state of the protection module being determined to be a pass-through state (56, 58, 59) once a number of modules to be protected whose configuration state for said wavelength channel is a pass-through state has reached or exceeded a positive lower threshold, said lower threshold being less than or equal to half the total number of modules to protect.

3. A method according to claim 1 or 2, **characterized by** the fact that said plurality of configuration states of the shared protection module comprises a blocking state and a pass-through state for said wavelength channel, said configuration state of the protection module being determined to be a blocking state (54) once a number of modules to be protected whose configuration state for said wavelength channel is a blocking state has reached or exceeded a positive upper threshold, said upper threshold being greater than half the total number of modules to protect.

4. A method according to one of the claims 1 to 3, **characterized by** the fact that said plurality of configuration states of the protection module comprises a plurality of pass-through states having respective gain levels for said wavelength channel, said configuration state of the shared protection module being determined to be a pass-through state once a number of modules to be protected whose configuration state for said wavelength channel is a pass-through state has reached or exceeded a positive threshold, said method comprising the step consisting of:
determining a gain level of said pass-through state of the shared protection module according to the gain level(s) of said module(s) to be protected whose configuration state for said wavelength channel is a pass-through state.

5. A method according to claim 4, **characterized by** the fact that said gain level of the shared protection module is determined as a weighted sum of the gain levels of the modules to be protected whose configuration state is a pass-through state.

6. A method according to one of the claims 1 to 5, **characterized by** the fact that the queue configuration state is determined repeatedly over time based on updated values of the configuration states of the modules to be protected.

7. An optical processing device comprising a first wavelength processing module (14) operative to receive a first optical signal and selectively configurable into a plurality of configuration states, for at least one wavelength channel of said optical signal, in order to carry out multiple corresponding processing actions belonging to the group that comprises blocking said wavelength channel, transmitting said wavelength channel, and transmitting said wavelength channel with chosen gain levels,
a second wavelength processing module (24) operative to receive a second optical signal and selectively configurable into a plurality of configuration states, for at least one wavelength channel of said second optical signal, in order to carry out multiple corresponding processing actions belonging to the group that comprises blocking said wavelength channel, transmitting said wavelength channel, and transmitting said wavelength channel with chosen gain levels,
a third wavelength processing module (34) selectively configurable into a plurality of configuration states, for at least one wavelength channel of an optical signal received by said third processing module, in order to carry out multiple corresponding processing actions belonging to the group that comprises blocking said wavelength channel, transmitting said wavelength channel, and transmitting said wavelength channel with chosen gain levels, said third processing module being operative as a shared protection module of the first and second processing modules,
**characterized by** the fact that said device comprises calculation means (30, 40) capable of determining a queue configuration state of the third processing module for a wavelength channel common to said first and second optical signals as a function of the configuration states of the first and second processing modules for said common wavelength channel, and
control means (30, 40) capable of configuring said third processing module into said queue configuration state for said common wavelength channel.

8. An optical processing device according to claim 7, **characterized by** the fact that it comprises a first reconfigurable add/drop multiplexer including a first input port (11), a first output port (17), and the first processing module (14) disposed between the first input port and the first output port, and a second reconfigurable add/drop multiplexer including a second input port (21), a second output port (27) and the second processing module (24) disposed between the second input port and the second output port.

9. An optical processing device according to one of the claims 7 to 8, **characterized by** the fact that the third processing module (34) includes a wavelength blocker.

10. An optical processing device according to one of the claims 7 to 8, **characterized by** the fact that the third processing module (34) includes a wavelength selective switch.

11. An optical processing device according to one of the claims 7 to 10, **characterized by** the fact that the third processing module (34) includes a controllable MEMS component in order to alter the configuration state of the processing module.

12. An optical processing device according to one of the claims 7 to 11, **characterized by** the fact that the third processing module (34) includes a controllable liquid-crystal component in order to alter the configuration state of the processing module.

## Patentansprüche

1. Verfahren zur Steuerung eines Moduls für die Verarbeitung von optischen Wellenlängen (34), welches als gemeinsames Schutzmodul einer Mehrzahl von Modulen für die Verarbeitung von optischen Wellenlängen (14, 24), die als zu schützende Module angeordnet sind, angeordnet ist, wobei ein jedes der besagten Verarbeitungsmodule selektiv in einer Mehrzahl von Konfigurationszuständen für mindestens einen gemeinsamen Wellenlängenkanal konfigurierbar ist, um mehrere entsprechende Verarbeitungen, welche das Blockieren des besagten Wellenlängenkanals, das Übertragen des besagten Wellenlängenkanals und das Übertragen des besagten Wellenlängenkanals mit ausgewählten Verstärkungspegeln umfassen, auszuführen, **gekennzeichnet durch** die folgenden Schritte:
Bestimmen (54, 56, 58, 59) eines Standby-Konfigurationszustands des gemeinsamen Schutzmoduls für den besagten Wellenlängenkanal in Abhängigkeit von den Konfigurationszuständen der zu schützenden Module für den besagten Wellenlängenkanal, und
Erzeugen von Steuersignalen (80, 83), um das besagte Schutzmodul in dem besagten Standby-Konfigurationszustand für den besagten Wellenlängenkanal zu konfigurieren.

2. Verfahren nach Anspruch 1, **dadurch gekennzeichnet, dass** die besagte Mehrzahl von Konfigurationszuständen des gemeinsamen Schutzmoduls einen blockierenden Zustand und einen durchlassenden Zustand für den besagten Wellenlängenkanal umfasst, wobei der besagte Konfigurationszustand des Schutzmoduls als ein durchlassender Zustand (56, 58, 59) bestimmt wird, wenn eine Anzahl von zu schützenden Modulen, deren Konfigurationszustand für den besagten Wellenlängenkanal ein durchlassender Zustand ist, einen positiven unteren Grenzwert erreicht oder überschreitet, wobei der besagte untere Grenzwert kleiner als die oder gleich der Hälfte der Gesamtanzahl der zu schützenden Module ist.

3. Verfahren nach Anspruch 1 oder 2, **dadurch gekennzeichnet, dass** die besagte Mehrzahl von Konfigurationszuständen des gemeinsamen Schutzmoduls einen blockierenden Zustand und einen durchlassenden für den besagten Wellenlängenkanal umfasst, wobei der besagte Konfigurationszustand des Schutzmoduls als ein blockierender Zustand (54) bestimmt wird, wenn eine Anzahl von zu schützenden Modulen, deren Konfigurationszustand für den besagten Wellenlängenkanal ein blockierender Zustand ist, einen positiven oberen Grenzwert erreicht oder überschreitet, wobei der besagte obere Grenzwert größer als die Hälfte der Gesamtanzahl der zu schützenden Module ist.

4. Verfahren nach einem der Ansprüche 1 bis 3, **dadurch gekennzeichnet, dass** die besagte Mehrzahl von Konfigurationszuständen des Schutzmoduls eine Mehrzahl von durchlassenden Zuständen mit jeweiligen Verstärkungspegeln für den besagten Wellenlängenkanal umfasst, wobei der besagte Konfigurationszustand des gemeinsamen Schutzmoduls als ein durchlassender Zustand bestimmt wird, wenn eine Anzahl von zu schützenden Modulen, deren Konfigurationszustand für den besagten Wellenlängenkanal ein durchlassender Zustand ist, einen positiven Grenzwert erreicht oder überschreitet, wobei das besagte Verfahren den folgenden Schritt umfasst:
Bestimmen eines Verstärkungspegels des besagten durchlassenden Zustands des gemeinsamen Schutzmoduls in Abhängigkeit von dem oder den Verstärkungspegel(n) des oder der besagten zu schützenden Modul(s)(e), dessen/deren Konfigurationszustand für den besagten Wellenlängenkanal ein durchlassender Zustand ist.

5. Verfahren nach Anspruch 4, **dadurch gekennzeichnet, dass** der besagte Verstärkungspegel des gemeinsamen Schutzmoduls als eine gewichtete Summe der Verstärkungspegel der zu schützenden Module, deren Konfigurationszustand ein durchlassender Zustand ist, bestimmt wird.

6. Verfahren nach einem der Ansprüche 1 bis 5, **dadurch gekennzeichnet, dass** der Standby-Konfigurationszustand über einen Zeitraum hinweg wiederholt in Abhängigkeit von den aktualisierten Werten der Konfigurationszustände der zu schützenden Module bestimmt wird.

7. Vorrichtung für die optische Verarbeitung, umfassend:
ein erstes Wellenlängenverarbeitungsmodul (14), welches für den Empfang eines ersten optischen Signals ausgelegt und selektiv in einer Mehrzahl von Konfigurationszuständen für mindestens einen Wellenlängenkanal des besagten ersten optischen Signals konfigurierbar ist, um mehrere entsprechende Verarbeitungen, welche das Blockieren des besagten Wellenlängenkanals, das Übertragen des besagten Wellenlängenkanals und
das Übertragen des besagten Wellenlängenkanals mit ausgewählten Verstärkungspegeln umfassen, auszuführen,
ein zweites Wellenlängenverarbeitungsmodul (24) welches für den Empfang eines zweiten optischen Signals ausgelegt und selektiv in einer Mehrzahl von Konfigurationszuständen für mindestens einen Wellenlängenkanal des besagten zweiten optischen Signals konfigurierbar ist, um mehrere entsprechende Verarbeitungen, welche das Blockieren des besagten Wellenlängenkanals, das Übertragen des besagten Wellenlängenkanals und das Übertragen des besagten Wellenlängenkanals mit ausgewählten Verstärkungspegeln umfassen, auszuführen,
ein drittes Wellenlängenverarbeitungsmodul (34), welches selektiv in einer Mehrzahl von Konfigurationszuständen für mindestens einen Wellenlängenkanal eines an dem besagten dritten Verarbeitungsmodul empfangenen optischen Signals konfigurierbar ist, um mehrere entsprechende Verarbeitungen, welche das Blockieren des besagten Wellenlängenkanals, das Übertragen des besagten Wellenlängenkanals und das Übertragen des besagten Wellenlängenkanals mit ausgewählten Verstärkungspegeln umfassen, auszuführen, wobei das besagte dritte Verarbeitungsmodul als gemeinsames Schutzmodul des ersten und des zweiten Verarbeitungsmoduls vorgesehen ist,
**dadurch gekennzeichnet, dass** die besagte Vorrichtung Rechenmittel (30, 40), welche dazu ausgelegt sind, einen Standby-Konfigurationszustand des dritten Verarbeitungsmoduls für einen Wellenlängenkanal, welcher von dem ersten und dem zweiten optischen Signal gemeinsam benutzt wird, gemäß den Konfigurationszuständen des ersten und des zweiten Verarbeitungsmoduls für den besagten gemeinsamen Wellenlängenkanal zu bestimmen, und
Steuermittel (30, 40), welche für die Konfiguration des besagten dritten Verarbeitungsmoduls in dem besagten Standby-Konfigurationszustand für den besagten gemeinsamen Wellenlängenkanal ausgelegt sind, umfasst.

8. Vorrichtung für die optische Verarbeitung nach Anspruch 7, **dadurch gekennzeichnet, dass** sie einen ersten rekonfigurierbaren Add/Drop-Multiplexer mit einem ersten Eingangsport (11), einem ersten Ausgangsport (17) und dem zwischen dem ersten Eingangsport und dem ersten Ausgangsport angeordneten ersten Verarbeitungsmodul (14), und einen zweiten rekonfigurierbaren Add/Drop-Multiplexer mit einem zweiten Eingangsport (21), einem zweiten Ausgangsport (27) und dem zwischen dem zweiten Eingangsport und dem zweiten Ausgangsport angeordneten zweiten Verarbeitungsmodul (24) aufweist.

9. Vorrichtung für die optische Verarbeitung nach einem der Ansprüche 7 bis 8, **dadurch gekennzeichnet, dass** das dritte Verarbeitungsmodul (34) einen Wellenlängenblocker umfasst.

10. Vorrichtung für die optische Verarbeitung nach einem der Ansprüche 7 bis 8, **dadurch gekennzeichnet, dass** das dritte Verarbeitungsmodul (34) einen Wellenlängenauswählschalter umfasst.

11. Vorrichtung für die optische Verarbeitung nach einem der Ansprüche 7 bis 10, **dadurch gekennzeichnet, dass** das dritte Verarbeitungsmodul (34) eine steuerbare Komponente vom Typ MEMS umfasst, um den Konfigurationszustand des Verarbeitungsmoduls zu ändern.

12. Vorrichtung für die optische Verarbeitung nach einem der Ansprüche 7 bis 11, **dadurch gekennzeichnet, dass** das dritte Verarbeitungsmodul (34) eine steuerbare flüssigkristalline Komponente umfasst, um den Konfigurationszustand des Verarbeitungsmoduls zu ändern.
